# EUROPEAN PATENT APPLICATION

(11) **EP 3 869 340 A1**
(43) Date of publication of application: **25.08.2021**
(21) Application number: 18937657.7
(22) Date of filing: 05.12.2018
(51) Int. Cl.: G06F 11/34

(54) **OPERATION AND MAINTENANCE DATA PROCESSING METHOD, SYSTEM AND DEVICE**

(30) Priority: 22.10.2018 CN 201811231058
(71) Applicant: Wangsu Science & Technology Co., Ltd., Shanghai 201800 (CN)
(72) Inventor: LIANG, Mincong, Shanghai 201800 (CN); WU, Weijuan, Shanghai 201800 (CN)
(74) Representative: De Arpe Tejero, Manuel
(86) International application number: PCT/CN2018/119361
(87) International publication number: WO 2020/082516

(57) **Abstract**

The present disclosure provides a method, a system, a device for processing operation and maintenance data. The method includes acquiring a plurality of types of the operation and maintenance data of a target server, converting the operation and maintenance data into quantized data of each dimension according to a preset rule, and determining quality evaluation information of the target server according to the quantized data of each dimension. The technical solution provided by the present application may improve evaluation precision of product performance.

## Description

### FIELD OF THE DISCLOSURE

The present disclosure generally relates to the technical field of Internet and, more particularly, relates to a method, a system, a device for processing operation and maintenance data.

### BACKGROUND

Currently, the performances of software products may be evaluated by checking the running status of the software periodically, viewing the error log of the software, or analyzing monitoring data and business data of the software themselves, and the like. After the evaluation results are obtained, problems in the software products may be identified. Generally, the problems may be reflected in the servers where the software are installed. In such way, the servers needed to be repaired may be identified by detecting the performances of the software products in the servers.

However, the above-mentioned method for evaluating the performances of the software products may often require operation and maintenance personnel to analyze a large amount of data. On the one hand, the operation and maintenance personnel may identify abnormal data only when the software fail, which may not effectively prevent the software from failing. On the other hand, the amount of daily alarm data of the software may be significantly large, and it is easy for the operation and maintenance personnel to miss high-risk alarms, which may not effectively repair the servers. Therefore, there is a need for a highly efficient and accurate evaluation method for product performance.

### BRIEF SUMMARY OF THE DISCLOSURE

The objective of the present application is to provide a method, a system, a device for processing operation and maintenance data, which may improve the evaluation precision of product performance.

To achieve the above-mentioned objective, one aspect of the present application provides a method for processing the operation and maintenance data. The method includes acquiring a plurality of types of the operation and maintenance data of a target server, converting the operation and maintenance data into quantized data of each dimension according to a preset rule, and determining quality evaluation information of the target server according to the quantized data of each dimension.

To achieve the above-mentioned objective, another aspect of the present application provides a system for processing the operation and maintenance data. The system may be configured to implement the above-mentioned method.

To achieve the above-mentioned objective, another aspect of the present application provides a device for processing the operation and maintenance data. The device includes a processor and a memory, where the memory is configured to store a computer program, and the computer program is executed by the processor to implement the above-mentioned method.

It can be seen from the above that the technical solution provided by the present application may automatically analyze the plurality of types of the operation and maintenance data of the target server, thereby determining the current operation quality of the target server. Specifically, after acquiring the plurality of types of the operation and maintenance data of the target server, the operation and maintenance data may be converted into the quantized data of each dimension. The quantized data may make the different operation and maintenance data to adopt a unified measurement standard. In such way, subsequently, the quantized data may be analyzed directly, thereby avoiding the problem that the data analysis methods are too complex due to different types of the operation and maintenance data, and further simplifying the data analysis process and improving data analysis efficiency. The quantized data of different dimensions may reflect the performances of all aspects of the target server, so the current operation quality of the target server may be determined according to the performance evaluation of all aspects of the target server. It can be seen from the above that the technical solution provided by the present application may simplify the data analysis process, and simultaneously analyze the data of different dimensions and accurately obtain the current quality evaluation information of the target server.

### BRIEF DESCRIPTION OF THE DRAWINGS

In order to clearly illustrate the technical solution in the embodiments of the present disclosure, the accompanying drawings need to be used in the description of the disclosed embodiments are briefly described hereinafter. Obviously, the drawings in the following description are merely some embodiments of the present disclosure. Other drawings derived from such drawings may be obtained by those skilled in the art without creative labor.
FIG. 1 illustrates a structural schematic of a system architecture according to embodiments of the present disclosure;
FIG. 2 illustrates a flow chart of a method for processing operation and maintenance data according to embodiments of the present disclosure;
FIG. 3 illustrates a schematic of a system for processing operation and maintenance data according to embodiments of the present disclosure;
FIG. 4 illustrates a schematic flow chart for automatic server repair according to embodiments of the present disclosure; and
FIG. 5 illustrates a structural schematic of a device for processing operation and maintenance data according to embodiments of the present disclosure.

### DETAILED DESCRIPTION

To more clearly describe the objectives, technical solution and advantages of the present disclosure, the present disclosure is further illustrated in detail with reference to the accompanying drawings in conjunction with embodiments.

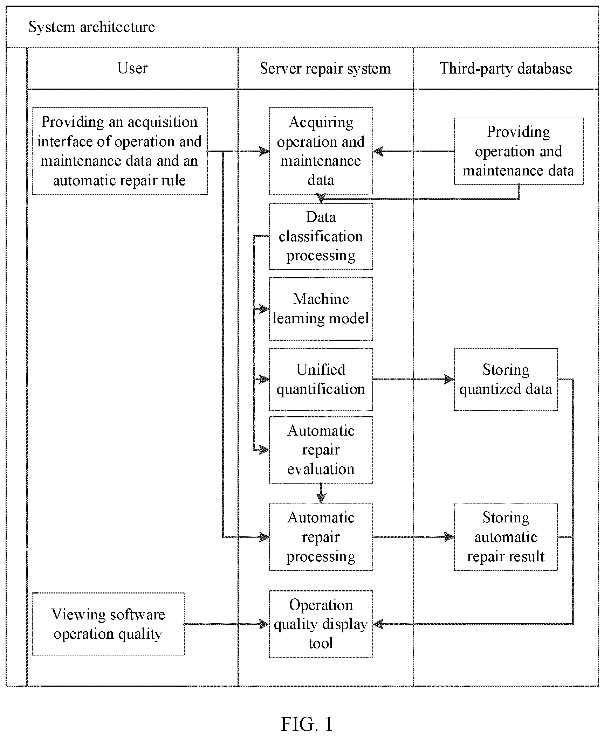

The method for processing operation and maintenance data provided by the present application may be applied to a system architecture shown in FIG. 1. Specifically, the system architecture may include a user, a server repair system, and a third-party database, where the user may provide an acquisition interface of the operation and maintenance data and may also provide a repair rule with respect to the server, and the user may view final software operation quality. The third-party database may store a plurality of types of the operation and maintenance data of a target server; and may also store the quantized data generated in a data analysis process and the repair result data generated in a target server repair process, and the like. The server repair system may analyze the plurality of types of the operation and maintenance data of the target server, thereby determining the business to be repaired in the target server and automatically repairing the business.

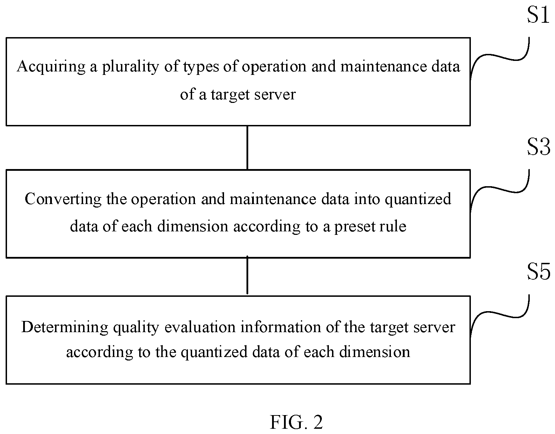

Specifically, referring to FIG. 1 and FIG. 2, the method for processing the operation and maintenance data provided by the present application may include the following steps.

In S1, the plurality of types of the operation and maintenance data of the target server may be acquired.

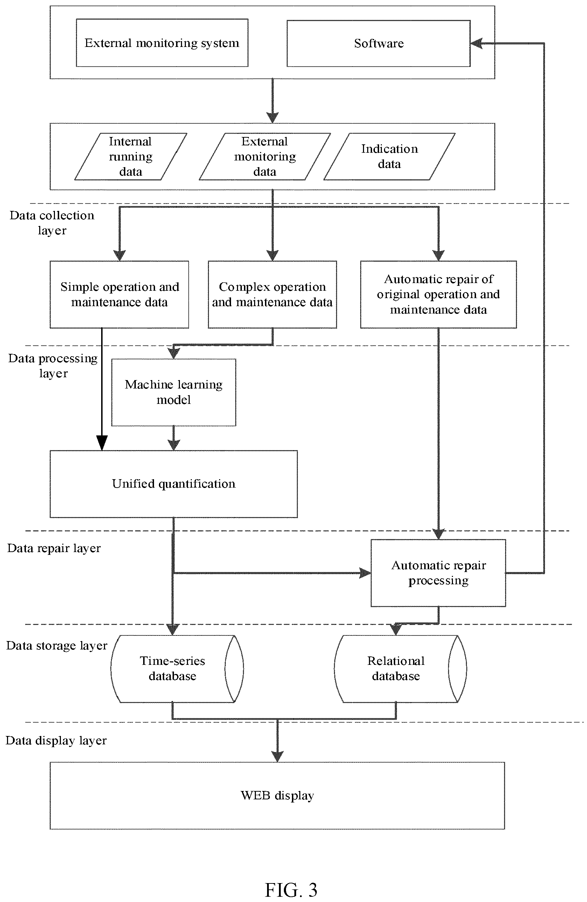

In one embodiment, the user may provide the acquisition interface of the operation and maintenance data to the server repair system. Through the acquisition interface, the server repair system may read the plurality of types of the operation and maintenance data of the target server from the third-party database. Referring to FIG. 3, the server repair system may include a data collection layer. The data collection layer may acquire data generated by software itself or data generated by an external monitoring system of the software. In such way, the acquired plurality of types of the operation and maintenance data may at least include business data generated internally by the software in the target server, monitoring data generated by the monitoring system in the target server, log data of the target server and indication data for characterizing the target server performance. Of course, in the actual applications, more operation and maintenance data may be analyzed. The plurality of types of the operation and maintenance data in the above-mentioned embodiments may only for the convenience of describing the technical solution of the present application, and may not mean that the technical solution of the present application may merely applicable to the plurality of types of the operation and maintenance data in the above-mentioned embodiments.

In one embodiment, different operation and maintenance data may have different types. For example, the business data internally generated by the software may include relational data for storing persistent data and may also include key-value data for storing frequently changing data. The external data of the software may include time-series data for storing real-time monitoring data and may also include log index data storing in unified format.

Since sources of the plurality of types of the operation and maintenance data are different, the methods for acquiring the plurality of types of the operation and maintenance data may also be different. In order to simplify the data acquisition process, the plurality of types of different operation and maintenance data may be uniformly acquired by a preset instruction having a specified data type and a specified format in one embodiment. Specifically, the specified data type may be, for example, a key-value type, and the specified format may be, for example, a JSON (JavaScript Object Notation) format, so the preset specification may be the instruction of the key-value type and the JSON format. In actual applications, when the operation and maintenance data needs to be acquired, the preset instruction having the specified data type and the specified format may be read, and then the preset instruction may be converted into a data query statement which matches current operation and maintenance data to be acquired according to the type of the operation and maintenance data to be read, so corresponding operation and maintenance data may be acquired by the data query statement obtained by the conversion. Specifically, the converted data query statement may include, for example, a general-purpose structured query language (SQL), a log index data domain specific query language (DSL), a syntax string for a specific database, and the like. For example, suppose the instruction of the key-value type and the JSON format may be expressed as:
{"table": "port",
"field": "web"}
then, for the general-purpose structured query language (SQL), the converted data query statement may be expressed as "select web from port".

In such way, the plurality of different types of the operation and maintenance data may be acquired in a simplified manner by converting the unified preset instruction into different data query statements.

In S3, the operation and maintenance data may be converted into quantized data of each dimension according to the preset rule.

In S5, quality evaluation information of the target server may be determined according to the quantized data of each dimension.

Referring to FIG. 3, in one embodiment, after the data collection layer acquires the plurality of types of the operation and maintenance data, the operation and maintenance data may be processed by a data processing layer. Specifically, since original operation and maintenance data have large differences, it is impossible to use a unified measurement standard to determine the quality of the operation and maintenance data. In order to solve the problem, the plurality of types of the operation and maintenance data may be converted into quantized data of multiple dimensions in one embodiment. The converted quantized data may have a same measurement standard, so different operation and maintenance data may be analyzed uniformly.

In one embodiment, the above-mentioned multiple dimensions may correspond to different business of the target server. For example, the converted quantized data may include quantized data characterizing the server status, and also include quantized data characterizing a success rate of a software business in the server. The above-mentioned server status and success rate of the software business may be configured as different dimensions. In such way, by refining the plurality of types of the operation and maintenance data into quantized data of different dimensions, the target server may be detected comprehensively.

In one embodiment, when the operation and maintenance data is converted into the quantized data, different quantization methods may be selected according to complexity of the operation and maintenance data. Specifically, if the operation and maintenance data is relatively simple, original operation and maintenance parameters included in the operation and maintenance data may be read, and quality levels associated with the original operation and maintenance parameters may be identified. For example, the operation and maintenance data characterizing the server status may be "server status: A", where A may mean the original operation and maintenance parameter included in the operation and maintenance data. For the server status, a default rule may be configured as: A indicates excellent, B indicates good, and C indicates failed. In such way, labels which reflect the quality of the server status such as excellent, good, failed may be used as the above-mentioned quality levels. The association between the original operation and maintenance parameters and the quality levels may be established through the default rule. For another example, the operation and maintenance data, which may characterize the success rate of the software business, may be "success rate: 97.2%". In addition, for the success rate of the software business, the preset default rule may be the following: above 99% is excellent, 95% to 99% is good, and below 95% is failed. Therefore, the quality level associated with the original operation and maintenance parameter included in the current operation and maintenance data may be good.

It can be seen that, for different operation and maintenance data, the original operation and maintenance parameters associated with the same quality level may have different forms. In order to unify the different forms, the preset rule may be used to define each quality level in one embodiment. For example, the preset rule may define that the standard parameter corresponding to the excellent quality level is 100, the standard parameter corresponding to the good quality level is 80, and the standard parameter corresponding to the failed quality level is 50. In such way, after identifying the quality levels associated with the original operation and maintenance parameters, the standard parameters defined by the preset rule for characterizing the quality levels may be determined, and the original operation and maintenance parameters may be replaced with the standard parameters. Through such processing manner, in the above-mentioned operation and maintenance data regarding the server status and the success rate of the software business, "A" may be replaced with 100, and "97.2%" may be replaced with 80. In such way, after replacing the parameters, the parameters associated with the same quality level may have same values, so that different operation and maintenance data may be uniformly quantized. The operation and maintenance data after the parameter replacement may be used as the processed quantized data according to the preset rule.

In one embodiment, some performances of the target server may often not be measured by one operation and maintenance parameter but may require a plurality of types of operation and maintenance parameters. In such case, when the operation and maintenance parameters are quantized, the above-mentioned quantization method may not be applied. In order to obtain the performances of the target server reflected by the plurality of types of the operation and maintenance parameters, two or more types of the operation and maintenance data may be trained as training samples in advance through a machine learning method, such that the trained machine leaning model may comprehensively obtain the quantized data of the target server in a certain dimension for the inputted operation and maintenance data.

Specifically, algorithms such as a decision tree, a logistic regression, a support vector machine, a naive Bayes, and the like may be used to train the pre-prepared operation and maintenance data samples, so the machine learning model capable of converting the plurality of types of the operation and maintenance data into the quantized data may be obtained. After the machine leaning model is obtained from the training, the acquired operation and maintenance data of the target server may be inputted into the machine learning model, so evaluation parameters of each dimension may be outputted through the machine learning model, and the evaluation parameters of each dimension may be used as the quantized data of each dimension. The evaluation parameters of each dimension may be the parameters unified by values. For example, the evaluation parameters may be the values of 100, 80, and 50 used in the above-mentioned embodiments for characterizing the quality levels.

In one embodiment, after the quantized data of each dimension are obtained by the conversion, the quantized data may generally change over time, so the quantized data may be stored in a time-series database. Subsequently, the quantized data may be read from the time-series database, and the quantized data may be displayed in a visual manner through an operation quality score dashboard, an operation quality trend chart, and the like, such that the user may intuitively view the running status of the target server.

In one embodiment, the quantized data of each dimension may reflect the performances of the target server in different aspects, so the quantized data of each dimension may be aggregated, and the aggregated information may be used as quality evaluation information of the target server. For example, the quantized data of each dimension may include parameters of the target server including interface usage, task accumulation, and the like, and by aggregating the parameters, current overall running quality of the target server may be obtained.

In one embodiment, after the quantized data of each dimension are obtained, the quantized data of each dimension may be analyzed to determine a target dimension which needs to be repaired. Specifically, for the quantized data of a current dimension, a repair trigger condition associated with the current dimension may be obtained. If the quantized data of the current dimension meets the repair trigger condition, the current dimension may be used as the target dimension to be repaired. For example, if the current dimension is the server status, so the repair trigger condition associated with the server status may be that the quantized data of the server status is less than or equal to 50. Currently, actual data obtained by the quantization may be compared with the threshold defined by the repair trigger condition; and if the magnitude relationship in the repair trigger condition is met, the current dimension may be considered to be abnormal and need to be repaired. In such way, for the quantized data of different dimensions, different repair trigger conditions may be adopted for the determination, thereby accurately obtaining the target dimension that needs to be repaired.

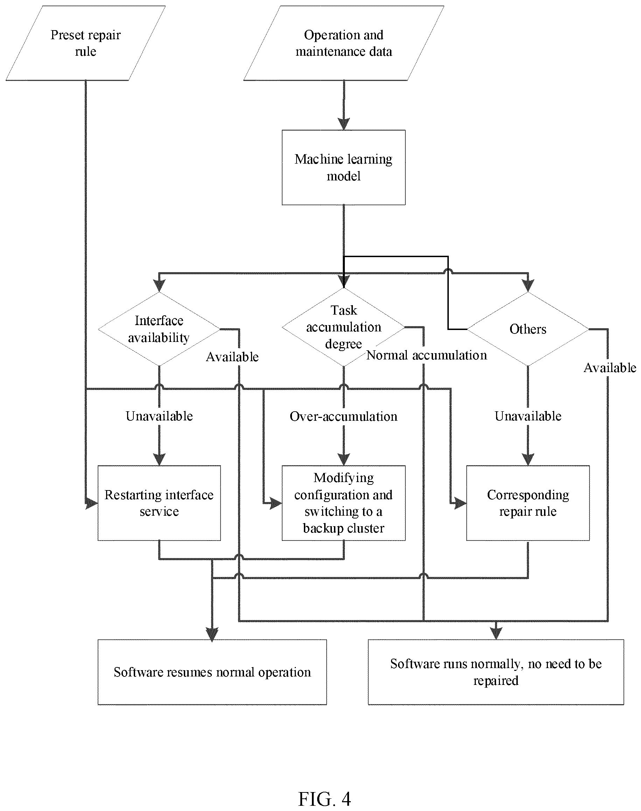

In one embodiment, after determining the target dimension that needs to be repaired, the repair rule matching the target dimension may be acquired from the repair rule provided by the user in advance, and the target server may be repaired according to the repair rule. Specifically, referring to FIG. 4, each dimension of the target server may be interface availability, task accumulation degree, and the like. Therefore, when the interface of the target server characterized by the target dimension is unavailable, the matching repair rule may be restarting the unavailable interface business. When a number of the task accumulation in the target server characterized by the target dimension exceeds a specified threshold, the matching repair rule may be switching unprocessed accumulated tasks in the target server to a backup server cluster. Of course, in the actual applications, more repair rules may be configured in advance. In such way, after the target dimension is determined, the matching repair rule may be selected to automatically repair the target server.

In one embodiment, after the target server is repaired, data characterizing the repair result may be generated. Since the data characterizing the repair result may not be generated periodically, the data characterizing the repair result do not change over time, such that the data characterizing the repair result may be stored in the relational database. Subsequently, the data characterizing the repair result may also be read from the relational database, and the data characterizing the repair result may be displayed in a visual manner, such that the user may view the repair result.

Referring to FIG. 3, the present disclosure further provides a system for processing the operation and maintenance data. The system may be configured to implement the technical solution described in the above-mentioned embodiments. Specifically, in the actual applications, the system may include:
a data collection layer, configured for acquiring the plurality of types of the operation and maintenance data of the target server;
a data processing layer, configured for converting the operation and maintenance data into the quantized data of each dimension according to the preset rule, and determining the target dimension to be repaired of the target server based on the quantized data; and
a data repair layer, configured for acquiring the repair rule matching the target dimension, and repairing the target server according to the repair rule.

In one embodiment, the data processing layer may include:
a machine learning model quantification module, configured for inputting the operation and maintenance data into the preset machine learning model and outputting the evaluation parameters of each dimension through the preset machine learning model, and using the evaluation parameters of each dimension as the quantized data of each dimension.

In one embodiment, the data processing layer may include:
an original operation and maintenance parameter identification module, configured for reading the original operation and maintenance parameters included in the operation and maintenance data, and identifying the quality levels associated with the original operation and maintenance parameters;
a parameter replacement module, configured for determining the standard parameters defined by the preset rule for characterizing the quality levels, and replacing the original operation and maintenance parameters with the standard parameters; and
a quantization module, configured for using the operation and maintenance data after the parameter replacement as the processed quantized data according to the preset rule.

In one embodiment, the data processing layer may include:
a trigger condition determination module, configured for acquiring the repair trigger condition associated with the current dimension, and using the current dimension as the target dimension to be repaired if the quantized data of the current dimension meets the repair trigger condition.

In one embodiment, the system may further include:
a data storage layer, configured for storing the quantized data in the time-series database and storing the data characterizing the repair result into the relational database.

In one embodiment, the system may further include:
a data display layer, configured for respectively reading the quantized data and the data characterizing the repair result from the time-series database and the relational database, and displaying the quantized data and the data characterizing the repair result in a visual manner.

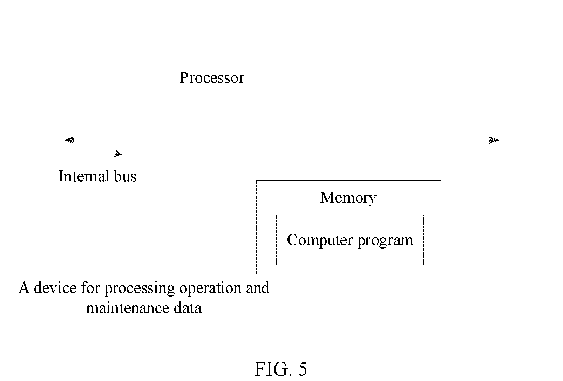

Referring to FIG. 5, the present application further provides a device for processing the operation and maintenance data. The device may include a processor and a memory. The memory may be configured to store a computer program, and the above-mentioned method for processing the operation and maintenance data may be implemented when the computer program is executed by the processor.

It can be seen from the above that the technical solution provided by the present application may automatically analyze the plurality of types of the operation and maintenance data of the target server, thereby determining the current operation quality of the target server. Specifically, after acquiring the plurality of types of the operation and maintenance data of the target server, the operation and maintenance data may be converted into the quantized data of each dimension. The quantized data may make the different operation and maintenance data to adopt the unified measurement standard. In such way, subsequently, the quantized data may be analyzed directly, thereby avoiding the problem that the data analysis methods are too complicated due to different types of the operation and maintenance data, and further simplifying the data analysis process and improving the data analysis efficiency. The quantized data of different dimensions may reflect the performances of all aspects of the target server. In such way, the current operation quality of the target server may be determined according to the performance evaluation of all aspects of the target server. It can be seen from the above that the technical solution provided by the present application may simplify the data analysis process, and simultaneously analyze the data of different dimensions and accurately obtain the current quality evaluation information of the target server.

Through the description of above-mentioned embodiments, those skilled in the art may clearly understand that the embodiments may be implemented by means of software in conjunction with an essential common hardware platform and, of course, may be implemented by hardware. Based on such understanding, the essential part of the above-mentioned technical solution or the part that contribute to the prior art may be embodied in the form of software products. The software products may be stored in computer readable storage media, such as ROM/RAM, magnetic disk, optical disk, and the like, and may include a plurality of instructions to enable a computer device (may be a personal computer, a server, a network device, and the like) to execute the methods described in various embodiments or parts of the embodiments.

The above-mentioned descriptions are merely certain preferred embodiments of the present disclosure and are not intended to limit the present disclosure. Without departing from the spirit and principles of the present disclosure, any modifications, equivalent substitutions, and improvements, and the like should fall within the scope of the present disclosure.

## Claims

1. A method for processing operation and maintenance data, the method comprising:
acquiring a plurality of types of the operation and maintenance data of a target server;
converting the operation and maintenance data into quantized data of each dimension according to a preset rule; and
determining quality evaluation information of the target server according to the quantized data of each dimension.

2. The method according to claim 1, wherein acquiring the plurality of types of the operation and maintenance data of the target server includes:
reading a preset instruction having a specified data type and a specified format, converting the preset instruction into a data query statement matching current operation and maintenance data to be acquired, and acquiring corresponding operation and maintenance data through the data query statement obtained by the conversion.

3. The method according to claim 1, wherein converting the operation and maintenance data into the quantized data of each dimension according to the preset rule includes:
inputting the operation and maintenance data into a preset machine learning model, outputting evaluation parameters of each dimension through the preset machine learning model and using the evaluation parameters of each dimension as the quantized data of each dimension.

4. The method according to claim 1, wherein converting the operation and maintenance data into the quantized data of each dimension according to the preset rule includes:
reading original operation and maintenance parameters included in the operation and maintenance data, and identifying quality levels associated with the original operation and maintenance parameters;
determining standard parameters defined by the preset rule for characterizing the quality levels, and replacing the original operation and maintenance parameters with the standard parameters; and
using the operation and maintenance data after parameter replacement as processed quantized data according to the preset rule.

5. The method according to claim 1, wherein the method further includes:
acquiring a repair trigger condition associated with a current dimension and using the current dimension as a target dimension to be repaired if quantized data of the current dimension meets the repair trigger condition.

6. The method according to claim 5, wherein after using the current dimension as the target dimension to be repaired, the method further includes:
acquiring a repair rule matching the target dimension and repairing the target server according to the repair rule.

7. The method according to claim 6, wherein the method further includes:
storing the quantized data in a time-series database and storing data characterizing a repair result into a relational database.

8. The method according to claim 7, wherein after repairing the target server according to the repair rule, the method further includes:
respectively reading the quantized data and the data characterizing the repair result from the time-series database and the relational database, and displaying the quantized data and the data characterizing the repair result in a visual manner.

9. The method according to claim 6, wherein repairing the target server according to the repair rule at least includes one of following:
if an interface of the target server **characterized by** the target dimension is unavailable, restarting unavailable interface business; and
if a number of accumulated tasks in the target server **characterized by** the target dimension exceeds a specified threshold, switching unprocessed accumulated tasks in the target server to a backup server cluster.

10. The method according to claim 1, wherein:
the plurality of types of the operation and maintenance data at least includes business data generated by software in the target server internally, monitoring data generated by a monitoring system in the target server, log data of the target server, and indication data for characterizing target server performance.

11. A system for processing operation and maintenance data, wherein:
the system is configured to implement the method according to any one of the claims 1 to 10.

12. A device for processing operation and maintenance data, comprising:
a processor and a memory, wherein the memory is configured to store a computer program, and the method according to any one of claims 1 to 10 is implemented when the computer program is executed by the processor.
